(19) Europäisches Patentamt
European Patent Office
Office européen des brevets

(11) **EP 2 450 722 A1**

(12) **EUROPÄISCHE PATENTANMELDUNG**

(43) Veröffentlichungstag:
**09.05.2012   Patentblatt 2012/19**

(51) Int Cl.:
***G01S 7/491*** *(2006.01)*   ***G01S 7/497*** *(2006.01)*
***G01S 17/32*** *(2006.01)*

(21) Anmeldenummer: **10014411.2**

(22) Anmeldetag: **09.11.2010**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Pepperl & Fuchs GmbH**
**68307 Mannheim (DE)**

(72) Erfinder:
• **Klemt, Hans-Jürgen**
  **12359 Berlin (DE)**

• **Klar, Ulrich**
  **12159 Berlin (DE)**
• **Tabel, Ernst**
  **22337 Hamburg (DE)**

(74) Vertreter: **Schiffer, Axel Martin et al**
**Weber & Heim Patentanwälte**
**Irmgardstrasse 3**
**81479 München (DE)**

(54)   **Vorrichtung und Verfahren zum Bestimmen der Laufzeit einer Prüfstrahlung**

(57)   Die Erfindung betrifft eine Vorrichtung zum Bestimmen der Laufzeit einer Prüfstrahlung zu einem Objekt und/oder durch ein Objekt in einem Überwachungsbereich mit einem Sender zum Aussenden der Prüfstrahlung in den Überwachungsbereich, mit einem Empfänger zum Empfangen von aus dem Überwachungsbereich kommender Prüfstrahlung und mit einer Steuer- und Auswerteeinheit zum Ansteuern des Senders und zum Auswerten der von dem Empfänger empfangenen Prüfstrahlung. Die erfindungsgemäße Vorrichtung ist dadurch gekennzeichnet, dass durch den Sender und den Empfänger ein Schwingkreis gebildet ist, dessen Schwingungsfrequenz von der Laufzeit der Prüfstrahlung zu dem Objekt und/oder durch das Objekt abhängt, wobei zum Erzeugen einer Schwingung des Schwingkreises die Steuer- und Auswerteeinheit dazu eingerichtet ist, das Aussenden von Prüfstrahlung durch den Sender zu stoppen, sobald der Empfänger Prüfstrahlung empfängt, den Sender zu veranlassen, Prüfstrahlung in den Überwachungsbereich zu senden, sobald der Empfänger keine Prüfstrahlung mehr empfängt, die Schwingungsfrequenz des Schwingkreises zu bestimmen und aus der Schwingungsfrequenz die Laufzeit der Prüfstrahlung zu bestimmen. Die Erfindung betrifft außerdem ein Verfahren zum Bestimmen der Laufzeit einer Prüfstrahlung zu einem Objekt und/oder durch ein Objekt.

Fig. 1

**Beschreibung**

Die vorliegende Erfindung bezieht sich in einem ersten Aspekt auf eine Vorrichtung zum Bestimmen der Laufzeit einer Prüfstrahlung zu einem Objekt und/oder durch ein Objekt in einem Überwachungsbereich, nach dem Oberbegriff des Anspruchs 1.

In einem zweiten Gesichtspunkt betrifft die Erfindung ein Verfahren zum Bestimmen der Laufzeit einer Prüfstrahlung zu einem Objekt und/oder durch ein Objekt in einem Überwachungsbereich, nach dem Oberbegriff des Anspruchs 13.

Bei bekannten Vorrichtungen zum Bestimmen der Laufzeit einer Prüfstrahlung zu einem Objekt und/oder durch ein Objekt in einem Überwachungsbereich sind ein Sender zum Aussenden der Prüfstrahlung in den Überwachungsbereich, ein Empfänger zum Empfangen von aus dem Überwachungsbereich kommender Prüfstrahlung und eine Steuer- und Auswerteeinheit zum Ansteuern des Senders und zum Auswerten der von dem Empfänger empfangenen Prüfstrahlung vorhanden.

Bei gattungsgemäßen Verfahren zum Bestimmen der Laufzeit einer Prüfstrahlung zu einem Objekt und/oder durch ein Objekt in einem Überwachungsbereich wird durch einen Sender die Prüfstrahlung in den Überwachungsbereich ausgesendet und aus dem Überwachungsbereich kommende Prüfstrahlung wird durch einen Empfänger empfangen.

Aus EP 0 747 727 A2 sowie aus EP 1 262 906 A2 sind Verfahren und Vorrichtungen zur Abstandsbestimmung bekannt, bei denen eine Prüfstrahlung zu einem Objekt ausgesendet wird und zurückkommende Prüfstrahlung empfangen wird. Hierbei wird allerdings nicht die Laufzeit der Prüfstrahlung direkt berücksichtigt. Vielmehr ist ein Filterbaustein mit einem bekannten Phasengang vorhanden. Gemessen wird eine Schwingungsfrequenz eines Schwingkreises, wobei die Schwingungsfrequenz von einer Phase oder einer Phasenverschiebung der Prüfstrahlung abhängt. Aus der Phasenverschiebung kann auf die Laufzeit der Prüfstrahlung geschlossen werden.

Problematisch hierbei ist, dass diese Zuordnung nicht eindeutig ist. Phasenunterschiede, die Vielfache von 2 π oder von 360° betragen, sind ununterscheidbar. Solche Schwingkreise können daher trotz verschiedener Laufzeiten der Prüfstrahlung dieselbe Schwingungsfrequenz aufweisen, wenn der Phasenunterschied gerade ein Vielfaches von 2 π beträgt. Außerdem ist von Nachteil, dass die erforderlichen Komponenten, insbesondere der Filterbaustein, aufwändig und somit kostenintensiv sind.

Bekannt sind weiterhin sogenannte Time of Flight-Methoden, bei denen die Laufzeit von Prüfstrahlung direkt gemessen wird. Hierbei ist bereits für eine Auflösung im Millimeter-Bereich ein hoher technischer Aufwand erforderlich. Ist die Prüfstrahlung Licht, so beträgt für eine Strecke von 1mm zu einem Objekt und 1mm zurück die zu messende Laufzeit etwa 6,6ps. Um diese Zeit messen zu können, muss ein Zähler mit sehr hoher Frequenz vorhanden sein. Zudem müssen zahlreiche Messungen in Folge gespeichert und verrechnet werden, um eine akzeptable Genauigkeit zu erreichen. Da hierbei die verfügbaren Technologien bereits weitestgehend ausgereizt werden, können Umwelteinflüsse kaum berücksichtigt werden. Die Genauigkeit der Ergebnisse ist daher stark von äußeren Einflüssen abhängig.

Um einen Abstand zu ermitteln, sind zudem Triangulationsverfahren bekannt, bei denen der Abstand durch einfache geometrische Verhältnisse bestimmt wird. Dabei ist die Laufzeit einer Prüfstrahlung nicht bedeutsam. Ein Nachteil bei Triangulationsverfahren liegt in der niedrigen Reichweite dieses Verfahrens.

Als eine **Aufgabe** der Erfindung kann angesehen werden, eine Vorrichtung und ein Verfahren bereitzustellen, welche eine Bestimmung der Laufzeit einer Prüfstrahlung in einfacher Weise und möglichst genau bewerkstelligen.

Diese Aufgabe wird durch die Vorrichtung mit den Merkmalen des Anspruchs 1 und durch das Verfahren mit den Merkmalen des Anspruchs 13 gelöst.

Vorteilhafte Ausgestaltungen der erfindungsgemäßen Vorrichtung und bevorzugte Varianten des erfindungsgemäßen Verfahrens sind Gegenstand der abhängigen Ansprüche und werden außerdem in der folgenden Beschreibung, insbesondere im Zusammenhang mit den Figuren, beschrieben.

Bei der Vorrichtung der oben genannten Art ist erfindungsgemäß durch den Sender und den Empfänger ein Schwingkreis gebildet, dessen Schwingungsfrequenz von der Laufzeit der Prüfstrahlung zu dem Objekt und/oder durch das Objekt abhängt, wobei zum Erzeugen einer Schwingung des Schwingkreises die Steuer- und Auswerteeinheit dazu eingerichtet ist,

- das Aussenden von Prüfstrahlung durch den Sender zu stoppen, sobald der Empfänger Prüfstrahlung empfängt,

- den Sender zu veranlassen, Prüfstrahlung in den Überwachungsbereich zu senden, sobald der Empfänger keine Prüfstrahlung mehr empfängt,

- die Schwingungsfrequenz des Schwingkreises zu bestimmen und

- aus der Schwingungsfrequenz die Laufzeit der Prüfstrahlung zu bestimmen.

Das Verfahren der oben genannten Art ist erfindungsgemäß dadurch weitergebildet, dass durch den Sender und den Empfänger ein Schwingkreise gebildet ist, dessen Schwingungsfrequenz von der Laufzeit der Prüfstrahlung zu dem Objekt und/oder durch das Objekt abhängt, dass das Aussenden von Prüfstrahlung durch den Sender gestoppt wird, sobald der Empfänger Prüfstrahlung empfängt, dass der Sender veranlasst wird, Prüfstrahlung in den Überwachungsbereich zu senden, sobald der Empfänger keine Prüfstrahlung mehr empfängt, dass die Schwingungsfrequenz des Schwingkreises bestimmt wird und dass aus der Schwingungsfrequenz die Laufzeit der Prüfstrahlung bestimmt wird.

Durch die erfindungsgemäße Lösung hängt die Schwingungsfrequenz des Schwingkreises monoton von der Laufzeit der Prüfstrahlung ab. Dadurch besteht ein eindeutiger Zusammenhang zwischen der Schwingungsfrequenz und der Laufzeit. Somit ist die Erfindung herkömmlichen Methoden überlegen, bei denen ein Schwingkreis mit einer Schwingungsfrequenz verwendet wird, die von der Phase einer Prüfstrahlung abhängt, da dabei Mehrdeutigkeiten in der Zuordnung der Schwingungsfrequenz zu der Laufzeit bestehen.

Als eine wesentliche Idee der Erfindung kann angesehen werden, ein Starten und Stoppen des Aussendens von Prüfstrahlung abhängig davon zu steuern, ob der Empfänger Prüfstrahlung empfängt. Durch diese Sendephasen und Sendepausen entsteht ein Schwingkreis, bei dem die Laufzeit der Prüfstrahlung einen Teil der Periodendauer der Schwingung des Schwingkreises ausmacht.

Im Sinn der Erfindung unterscheiden sich Sendephasen und Sendepausen durch die Leistung der ausgesandten Prüfstrahlung. Dabei kann Prüfstrahlung auch in einer Sendepause ausgesandt werden, das heißt wenn im Folgenden von einem Abschalten oder Stoppen des Senders die Rede ist. Wichtig ist allein, dass zwischen einer Sendephase und einer Sendepause der Unterschied in der Leistung der ausgesandten Prüfstrahlung groß genug ist, dass zuverlässig entschieden werden kann, ob der Empfänger Prüfstrahlung einer Sendephase oder Prüfstrahlung einer Sendepause empfängt.

Als ein Kerngedanke der Erfindung kann erachtet werden, die Laufzeit einer Prüfstrahlung mit einem Schwingkreis zu bestimmen, dessen Schwingungsfrequenz, insbesondere ausschließlich, von der Laufzeit der Prüfstrahlung sowie von Verzögerungszeiten in elektrischen Komponenten der Vorrichtung abhängt. Zu den elektrischen Komponenten können insbesondere der Sender, der Empfänger, die Steuer-und Auswerteeinheit sowie elektrische Leitungen zählen.

Ein Vorteil der erfindungsgemäßen Vorrichtung und des erfindungsgemäßen Verfahrens kann darin gesehen werden, dass die Frequenz des Schwingkreises sehr leicht messbar ist und dass einzelne Fehlmessungen automatisch durch das Messprinzip ausgemittelt werden. Im Gegensatz zu Time of Flight-Messungen sind zudem vorteilhafterweise keine leistungsfähigen Prozessoren notwendig.

Grundsätzlich kann es sich bei der Prüfstrahlung um jede Art von Strahlung handeln. Bei einer Ausgestaltung der erfindungsgemäßen Vorrichtung ist die Prüfstrahlung akustisch und/oder elektromagnetisch und der Sender ist zum Aussenden und der Empfänger zum Empfangen von akustischer und/oder elektromagnetischer Prüfstrahlung eingerichtet. Bei dieser Ausgestaltung kann die erfindungsgemäße Vorrichtung somit ein Echolot oder ein Radar-Gerät sein. Bevorzugt ist aber vorgesehen, dass der Sender ein Lichtsender, der Empfänger ein Lichtempfänger und die Prüfstrahlung Licht ist.

Bei einer Ausgestaltung der erfindungsgemäßen Vorrichtung ist ein Sende-Polarisationsfilter vorhanden zum Polarisieren des in den Überwachungsbereich gesandten Lichts. Zudem ist ein Empfangs-Polarisationsfilter ist vorhanden zum Transmittieren von polarisiertem Licht auf den Empfänger. Hierdurch kann Umgebungslicht besonders gut unterdrückt werden.

Hierbei ist eine weitere bevorzugte Variante möglich, bei der die Polarisationsrichtungen des Sende-Polarisationsfilters und des Empfangs-Polarisationsfilters zueinander senkrecht stehen. Dabei wird ein Retroreflektor verwendet, der im Überwachungsbereich angeordnet ist, insbesondere an dem Objekt oder an einem Ende einer zu vermessenden Strecke. Der Retroreflektor reflektiert Licht, das heißt die Prüfstrahlung, und dreht gleichzeitig die Polarisationsrichtung des Lichts um 90°. So gelangt auf den Empfänger im Wesentlichen nur Licht, das von dem Retroreflektor zurückgestrahlt wurde. Vorteilhafterweise wird damit vermieden, dass Prüfstrahlung, die von anderen Gegenständen im Überwachungsbereich zurückgestrahlt wird, unerwünschterweise auf den Empfänger fällt.

Alternativ oder zusätzlich zu den Polarisationsfiltern kann eine Unterdrückung von Fremdlicht auch durch eine geeignete Auswertung erfolgen. Hierbei können Hintergrundsignale, die bei abgeschaltetem Sender vom Empfänger gemessen werden, gespeichert werden. Diese Hintergrundsignale werden dann mit den Signalen, die der Empfänger während des Normalbetriebs misst, verrechnet, insbesondere von diesen Signalen subtrahiert.

Bei einem weiteren vorteilhaften Ausführungsbeispiel der erfindungsgemäßen Vorrichtung ist die Steuer- und Auswerteeinheit dazu eingerichtet, einen abgeschalteten Zustand des Senders, in welchem der Sender keine Prüfstrahlung in den Überwachungsbereich aussendet, zu verlängern. Hierbei ist nach wie vor die Schwingungsfrequenz des Schwingkreises monoton von der Laufzeit der Prüfstrahlung abhängig. Vorteilhafterweise ist allerdings die mittlere Leistung der ausgesendeten Prüfstrahlung geringer. Handelt es sich bei der Prüfstrahlung um Licht, kann so eine niedrigere Laserklasse, insbesondere eine augensichere Laserklasse wie die Laserklasse 1, eingehalten werden. Dadurch sind vorteilhafterweise keine Sicherheitsvorkehrungen für Bedienpersonal erforderlich. Zudem sinkt hierdurch der Energiebedarf.

Es ist jedoch zu bedenken, dass die Schwingungsfrequenz des Schwingkreises umso niedriger ist, je länger die von der Prüfstrahlung zurückgelegte Laufstrecke ist. Daher können lange Laufstrecken ungenauer aus der Schwingungsfrequenz bestimmt werden als kurze Laufstrecken. Wird nun ein abgeschalteter Zustand des Senders verlängert, sinkt dadurch ebenfalls die Schwingungsfrequenz. Als Folge ist die Genauigkeit niedriger, mit der eine Laufstrecke bestimmt werden kann.

Um einen möglichst geringen Energiebedarf und gleichzeitig eine möglichst hohe Messpräzision zu erreichen, kann vorgesehen sein, dass die Steuer- und Auswerteeinheit zunächst in einem Energiesparmodus läuft, in welchem sie den abgeschalteten Zustand des Senders verlängert. Liegt die Schwingungsfrequenz des Schwingkreises nun unter einem vorgebbaren Grenzwert, so schaltet die Steuer- und Auswerteeinheit um in einen Präzisionsmodus, in dem sie den abgeschalteten Zustand des Senders nicht verlängert. Vorteilhafterweise wird so bei großen Laufzeiten vermieden, dass die Messgenauigkeit durch ein Verlängern der Sendepausen reduziert würde.

Durch ein Verlängern des abgeschalteten Zustands des Senders kann das Tastverhältnis, das heißt das Verhältnis zwischen dem angeschalteten und dem abgeschalteten Zustand des Senders, festgelegt werden. Die Grenze liegt hier bei 1:1, also bei gleichen Dauern für den an- und abgeschalteten Zustand.

Bei einer weiteren bevorzugten Variante der erfindungsgemäßen Vorrichtung ist zum Herausfiltern von Störsignalen ein Frequenzfilter, insbesondere ein optischer Filter, zwischen dem Objekt im Überwachungsbereich und dem Empfänger vorhanden. Alternativ oder zusätzlich kann auch ein elektrischer Filter zwischen dem Empfänger und dem Sender vorhanden sein. Vorteilhafterweise werden somit vom Empfänger nur Signale berücksichtigt, deren Frequenz mit der der ausgesendeten Prüfstrahlung übereinstimmt.

Bei einer weiteren Alternative der erfindungsgemäßen Vorrichtung ist als Objekt im Überwachungsbereich mindestens ein Reflektor zum Zurückstrahlen von ausgesendeter Prüfstrahlung zu dem Empfänger vorhanden. Da der von einem Reflektor zurückgeworfene Anteil der Prüfstrahlung sehr hoch ist, wird hierdurch möglich, dass nur Reflektoren im Überwachungsbereich erkannt werden. Somit stören vorteilhafterweise Anlagen oder sonstige Gegenstände im Umfeld nicht die Messung. Bei diesem Reflektor kann es sich insbesondere um einen Folien- oder Kunststoffreflektor handeln.

Es kann aber auch vorgesehen sein, dass ein Reflektor als Begrenzung des Überwachungsbereichs vorgesehen ist. Dies ist insbesondere dann vorteilhaft, wenn ein Objekt im Überwachungsbereich wenigstens teilweise transparent für die Prüfstrahlung ist. In diesem Fall wird von dem Objekt kaum oder keine Prüfstrahlung auf den Empfänger zurückgestrahlt. Vielmehr durchläuft die Prüfstrahlung das Objekt und erfährt dadurch eine Verzögerung. Handelt es sich bei der Prüfstrahlung um Licht, wird diese Verzögerung durch den Brechungsindex und die Länge des Objekts bestimmt. Nach Durchlaufen des Objekts wird die Prüfstrahlung am Reflektor reflektiert, durchläuft gegebenenfalls erneut das Objekt und wird schließlich vom Empfänger gemessen. Ist der Brechungsindex des Objekts bekannt, kann vorteilhafterweise die Objektlänge bestimmt werden. Bei Kenntnis der Objektlänge kann hingegen der Brechungsindex bestimmt werden.

Bei einer vorteilhaften Ausgestaltung der erfindungsgemäßen Vorrichtung weist die Steuer- und Auswerteeinheit zum Ansteuern des Senders einen Sendeverstärker und zum Auswerten von Empfangssignalen des Empfängers einen Empfangsverstärker auf. Der Sende- und der Empfangsverstärker können auch als Steuer- und Auswerteeinheit dienen oder teilweise deren Funktion ausführen. Die Steuer- und Auswerteeinheit ist also funktional zu sehen und kann durch verschiedene, räumlich getrennte Komponenten aufgebaut sein, insbesondere durch den Sendeverstärker, den Empfangsverstärker und einen Frequenzzähler.

Hierbei kann bevorzugt vorgesehen sein, dass der Empfangsverstärker dazu eingerichtet ist, über eine Rückkopplung, insbesondere über eine elektrische Leitung, den Sendeverstärker anzusteuern, sobald der Empfänger Prüfstrahlung empfängt und/oder sobald der Empfänger Prüfstrahlung nicht mehr empfängt. Hierdurch wird die Anzahl an Komponenten des Schwingkreises reduziert. Dadurch können vorteilhafterweise auch Verzögerungszeiten sehr niedrig sein, welche durch die Komponenten bedingt sind und für die Bestimmung der Laufzeit der Prüfstrahlung nachteilig sind.

Bei einer bevorzugten Alternative der erfindungsgemäßen Vorrichtung ist ein Pilotsender, insbesondere ein Pilotlaser, zum Aussenden eines Justagelichtstrahls vorhanden. Dabei liegt die Wellenlänge des Justagelichtstrahls im sichtbaren Bereich. Vorteilhafterweise wird hiermit eine besonders einfache Ausrichtung der Vorrichtung, das heißt der von der Vorrichtung ausgesandten Prüfstrahlung, auf das Objekt im Überwachungsbereich möglich.

Bei einem weiteren Ausführungsbeispiel der erfindungsgemäßen Vorrichtung ist die vom Sender in den Überwachungsbereich gesendete Prüfstrahlung nichtsichtbares Licht, insbesondere UV-Licht oder IR-Licht. Somit ist die Prüfstrahlung von Bedienpersonal nicht sichtbar und kann dieses nicht irritieren. Weiterhin wird bei Verwendung eines Pilotsenders der Bedienkomfort erhöht, da der Lichtpunkt des Pilotsenders nicht von pulsierender, sichtbarer Prüfstrahlung überlagert wird.

In der Regel ist ein Unterschied zwischen einer Einschaltzeit und einer Abschaltzeit des Senders gering. Daher hat der Amplitudenverlauf der Prüfstrahlung, das heißt die Steilheit des Amplitudenanstiegs beim Einschalten und des Amplitudenabfalls beim Abschalten, einen geringen Einfluss auf die Messgenauigkeit. Besonders gute Ergebnisse können aber erzielt werden, wenn die Zeitspannen berücksichtigt werden, die zum Überschreiten einer Amplitudenschwelle beim Einschalten und zum Unterschreiten einer Amplitudenschwelle beim Abschalten benötigt werden. Beispielsweise kann für eine Auswertung der Laufzeit der Prüfstrahlung die Steuer- und Auswerteeinheit diese Zeitspannen zu den Verzögerungszeiten der elektrischen Komponenten addieren.

Die erfindungsgemäße Vorrichtung kann in Lichtschranken integriert sein. Vorteilhafterweise kann dabei die erfindungsgemäße Vorrichtung der Unterscheidung eines Nahbereichs und eines Fernbereichs dienen, in welche der Überwachungsbereich geteilt wird. Dadurch wird die Zuverlässigkeit einer Lichtschranke weiter erhöht und Störsignale führen seltener zu Fehlschaltungen.

Bei Reflexionslichtschranken kann durch die erfindungsgemäße Vorrichtung eine besonders zuverlässige Vordergrundausblendung erfolgen. Bei einer Vordergrundausblendung gilt ein Objekt nur dann als erkannt, wenn die Prüfstrahlung der Lichtschranke in einem Fernbereich und nicht in einem Nahbereich auf ein Objekt trifft.

Ein besonders großer Vorteil ergibt sich durch die erfindungsgemäße Vorrichtung, wenn folienumschrumpfte Objekte erkannt werden sollen. Diese können Prüfstrahlung ähnlich stark wie ein Reflektor zurückstrahlen. Bei herkömmlichen Lichtschranken können sie daher fälschlicherweise für den Reflektor gehalten werden. Zudem treten depolarisierende Effekte auf, so dass auch durch Polarisationsfilter nicht immer eine zuverlässige Unterscheidung zwischen einem folienumschrumpften Objekt und einem Reflektor möglich ist. Durch eine Bestimmung der Laufzeit gemäß der Erfindung wird hingegen eine sichere Unterscheidung erreicht. Daher kann außerdem auf Polarisationsfilter vorteilhafterweise verzichtet werden.

Zudem können die erfindungsgemäße Vorrichtung und das erfindungsgemäße Verfahren bei Lichttastern genutzt werden. Hier ermöglichen sie eine zuverlässige Hintergrundauswertung bei einer gleichzeitig sehr hohen Reichweite. Sie können auch zur Zonenerkennung und/oder Objektklassifikation, beispielsweise durch eine Höhenkontrolle, eingesetzt werden. Weiterhin kann eine kleinere Bauform erreicht werden, insbesondere wenn das herkömmlicherweise durchgeführte Triangulationsverfahren durch das erfindungsgemäße Verfahren ersetzt wird. Die Erfindung ermöglicht dabei eine koaxiale Messung, das heißt, die Richtung von ausgesandter Prüfstrahlung und die Richtung, aus der Prüfstrahlung empfangen wird, stimmen im Wesentlichen überein. Im Gegensatz zu Triangulationsverfahren entsteht somit vorteilhafterweise kein Blindbereich. Außerdem werden, insbesondere bei hohen Tastweiten, geringe s/w-Differenzen erzielt.

Weitere Vorteile gegenüber herkömmlichen Lichtschranken und Lichttastern sind in dem höheren Schutz vor Manipulationen und Verstellungen zu sehen. Zudem können mehrere Schaltpunkte vorgegeben werden. Außerdem ist eine elektrische Parametrierung möglich, insbesondere ist kein mechanisches Verstellen erforderlich, um beispielsweise eine Tastweite einzustellen. Schließlich kann eine Arbeitspunktnachführung erfolgen, um Schwankungen auszugleichen.

Vorteilhafterweise können Standard-Lichtschranken in einfacher Weise umgerüstet werden, um als eine erfindungsgemäße Vorrichtung betrieben zu werden oder ein erfindungemäßes Verfahren auszuführen. Hierzu ist eine Steuer- und Auswerteeinheit notwendig, die die entsprechenden Funktionen der erfindungsgemäßen Vorrichtung oder die entsprechenden Schritte des erfindungsgemäßen Verfahrens ausführt. Insbesondere sind gegenüber Standard-Lichtschranken keine oder kaum Mehrkosten für die erfindungemäße Vorrichtung erforderlich.

Im Folgenden wird beschrieben, wie gemäß einer Ausführung der Erfindung die Steuer- und Auswerteeinheit die Laufzeit der Prüfstrahlung bestimmt.

Die Laufzeit $t_{Strecke}$ der Prüfstrahlung wird durch die Länge s der Strecke bis zum Objekt und/oder durch das Objekt sowie durch die Geschwindigkeit c der Prüfstrahlung bestimmt: $t_{Strecke} = s / c$.

Die Geschwindigkeit c kann dabei die Lichtgeschwindigkeit in Luft oder im Objekt sein.

Eine Periodendauer T einer Schwingung des Schwingkreises kann sich aus den folgenden Zeitdauern zusammensetzen:

1. der Laufzeit $2t_{Strecke}$ der Prüfstrahlung zum Objekt und zurück beim Einschalten des Senders, also die Laufzeit der steigenden Flanke der Prüfstrahlung,

2. Verzögerungszeiten der elektrischen Komponenten $t_{Verzögerung}$, um den Sender zu veranlassen, das Aussenden von Prüfstrahlung zu stoppen, sobald der Empfänger Prüfstrahlung empfängt,

3. der Laufzeit $2t_{Strecke}$ der Prüfstrahlung zum Objekt und zurück beim Ausschalten des Senders, also die Laufzeit der fallenden Flanke der Prüfstrahlung,

4. Verzögerungszeiten der elektrischen Komponenten $t_{Verzögerung}$, um den Sender zum Aussenden von Prüfstrahlung zu veranlassen, sobald der Empfänger Prüfstrahlung nicht mehr empfängt.

Somit ist die Periodendauer $T = 2 (2t_{Strecke} + t_{Verzögerung})$.

Die Frequenz f des Schwingkreises ist der Kehrwert der Periodendauer T, also: $f = 1 / [2 (2t_{Strecke} + t_{Verzögerung})] = 1 / [2 (2s/c + t_{Verzögerung})]$

Anstelle der vom Objekt zurückgestrahlten Prüfstrahlung kann auch die durch das Objekt transmittierte Prüfstrahlung gemessen werden. In diesem Fall ist in den oberen Formeln $2t_{Strecke}$ durch $1t_{Strecke}$ zu ersetzen. Dabei kann $1t_{Strecke}$ durch die Laufzeit der Prüfstrahlung von dem Sender zum Objekt, die Laufzeit durch das Objekt und die Laufzeit vom Objekt zum Empfänger gebildet sein.

Die Verzögerungszeiten $t_{Verzögerung}$ können durch eine Verzögerungszeit $t_{Sender}$ des Senders, eine Verzögerungszeit $t_{Empfänger}$ des Empfängers und eine Verzögerungszeit $t_{Rückkopplung}$ der Rückkopplung bestimmt sein. Bei $t_{Rückkopplung}$ kann es sich beispielsweise um die Signallaufzeit eines elektrischen Signals über eine elektrische Leitung handeln. In diesem Fall gilt:

$$f = 1 / [2 (2s/c + t_{Verzögerung})] = 1 / [2 (2s/c + t_{Sender} + t_{Empfänger} + t_{Rückkopplung})].$$

Die Geschwindigkeit c und die Verzögerungszeiten $t_{Verzögerung}$ sind in der Regel konstant und können in der Steuer- und Auswerteeinheit gespeichert sein. Sind die Verzögerungszeiten $t_{Verzögerung}$ klein im Vergleich zur Laufzeit $t_{Strecke}$, dann ist die Frequenz proportional zur Strecke s: $f(s) \sim 1 / s$.

Mit obigen Formeln wird deutlich, dass sich die Frequenz f besonders stark mit der Strecke s ändert, wenn die Verzögerungszeiten $t_{Verzögerung}$ klein sind. Bei kleinen Verzögerungszeiten $t_{Verzögerung}$ ist deshalb die Messgenauigkeit höher.

Die Verzögerungszeiten $t_{Verzögerung}$ können, insbesondere bei Lichtschranken mit langsamen elektrischen Komponenten, 1µs betragen. Es sind aber auch Verzögerungszeiten von nur 1ns, insbesondere bei Lichtschranken mit schnellen elektrischen Komponenten, möglich. Eine Drift der Verzögerungszeiten $t_{Verzögerung}$ von beispielsweise 1 % führt bei langsamen elektrischen Komponenten zu großen Fehlern. Bei schnellen elektrischen Komponenten sind die resultierenden Fehler hingegen gering. Zudem ist bei großen Strecken s, beispielsweise bei 5m, die Auswirkung einer Drift geringer als bei kurzen Strecken s, die beispielsweise nur 1 m betragen.

In der folgenden Tabelle sind die Fehler in der Bestimmung einer Strecke s angegeben, die durch eine Drift der Verzögerungszeiten von 1 % hervorgerufen werden. Dabei sind die Fehler für Verzögerungszeiten von 1µs, 0,1µs, 0,01µs und 1 ns angegeben.

| Strecke s / Verzögerungszeit | 1m | 2m | 3m | 4m | 5m |
|---|---|---|---|---|---|
| 1 µs | 151,52 cm | 75,76 cm | 50,51 cm | 38,88 cm | 30,30 cm |
| 0,1 µs | 15,15 cm | 7,59 cm | 5,05 cm | 3,79 cm | 3,03 cm |
| 0,01 µs | 1,52 cm | 0,76 cm | 0,51 cm | 0,39 cm | 0,30 cm |
| 1 ns | 0,15 cm | 0,08 cm | 0,05 cm | 0,04 cm | 0,03 cm |

Beispielsweise beträgt der Fehler 0,76cm für eine von der Prüfstrahlung zurückgelegte Strecke von 2m, eine Verzögerungszeit von $t_{Verzögerung} = 0,01$µs und einer Drift von 1 %, also von 0,1 ns.

Diese Werte können für eine Drift von 1 % berechnet werden durch: $2s = c (2t_{Strecke} + 1\% \ t_{Verzögerung})$. Der Fehler resultiert hier also daraus, dass die Zeitdauer der Drift 1% $t_{Verzögerung}$ nicht von der Zeit $2t_{Strecke}$, die zum Zurücklegen der Strecke 2s zum Objekt und zurück benötigt wird, unterschieden werden kann.

Üblicherweise betragen die Driften wenige Prozent. Bei elektrischen Komponenten, die eine Verzögerungszeit von 0,01µs oder 1ns aufweisen, ist somit auch bei Driften eine genaue und zuverlässige Entfernungsbestimmung möglich.

Schwieriger ist aber der Fall, bei denen die Verzögerungszeit von elektrischen Komponenten 1µs oder 0,1µs beträgt. Hier ist eine aufwändigere Auswertung erforderlich, um zuverlässige Ergebnisse zu erzielen.

Die Driften können durch Temperaturänderungen der elektrischen Komponenten bedingt sein.

Bei einer besonders bevorzugten Ausgestaltung der erfindungsgemäßen Vorrichtung kann dieser Temperatureffekt bestimmt und/oder berücksichtigt werden. Dazu ist ein Temperaturfühler zum Bestimmen einer Temperatur vorhanden und die Steuer- und Auswerteeinheit ist dazu eingerichtet, die Laufzeit der Prüfstrahlung aus der Schwingungsfrequenz des Schwingkreises und aus der mit dem Temperaturfühler bestimmten Temperatur zu bestimmen. Hierbei kann der Temperaturfühler an und/oder in einem Gehäuse der Vorrichtung angeordnet sein. Mit der bestimmten Temperatur ist es vorteilhafterweise möglich, eine Temperaturabhängigkeit der Verzögerungszeiten von elektronischen Komponenten der Vorrichtung, wie beispielsweise der Steuer-und Auswerteeinheit, des Senders, des Empfängers, des Sendeverstärkers und des Empfangsverstärkers, zu berücksichtigen. Hierfür kann eine Korrekturkennlinie vorab gespeichert sein, die die Temperaturabhängigkeit des Schwingkreises enthält.

Alternativ oder zusätzlich kann die Korrekturkennlinie auch in einem Teach-Vorgang einlernbar sein. Für den Teach-Vorgang können eine oder mehrere Referenzmessungen bei den mit dem Temperaturfühler bestimmten Temperaturen durchgeführt werden. Es kann vorgesehen sein, dass ein Thermoelement, beispielsweise ein Heizwiderstand oder ein Peltierelement, vorhanden ist, um verschiedene Temperaturen für die Referenzmessungen zu erzeugen. In einer Referenzmessung wird eine Schwingungsfrequenz für eine Referenzstrecke gemessen, die von der Prüfstrahlung zurückgelegt wird. Da die Länge der Referenzstrecke bekannt ist, ist auch die Laufzeit der Prüfstrahlung bekannt. Somit kann aus der ermittelten Schwingungsfrequenz die Verzögerungszeit der elektronischen Komponenten für die vorliegende Temperatur ermittelt werden.

Alternativ oder zusätzlich kann die mit dem Temperaturfühler bestimmte Temperatur auch für eine Zuordnung der ermittelten Laufzeit zu einer von der Prüfstrahlung zurückgelegten Strecke genutzt werden. Die Laufzeit ist nämlich abhängig von dem im Allgemeinen temperaturabhängigen Brechungsindex des Mediums, in dem sich die Prüfstrahlung bewegt. Vorteilhafterweise kann somit hierdurch die Temperaturabhängigkeit des Brechungsindex des Mediums, bei dem es sich beispielsweise um Luft handeln kann, berücksichtigt werden.

Eine besonders gute Bestimmung der Temperatur des Mediums, in dem sich die Prüfstrahlung bewegt, wird erreicht, wenn an dem Objekt im Überwachungsbereich ebenfalls ein Temperaturfühler vorhanden ist.

Bei einer bevorzugten Variante des erfindungsgemäßen Verfahrens wird ein erster Teach-Vorgang durchgeführt, in welchem eine Signalform der von dem Objekt zurückgestrahlten Prüfstrahlung eingelernt wird. Hiermit kann vorteilhafterweise eine besonders gute Unempfindlichkeit gegenüber Fremdlicht erreicht werden.

Bei einer weiteren bevorzugten Ausführungsform des erfindungsgemäßen Verfahrens wird ein zweiter Teach-Vorgang durchgeführt, in dem eine Zuordnung von Schwingungsfrequenzen des Schwingkreises zu Laufzeiten der Prüfstrahlung eingelernt wird. Alternativ und/oder zusätzlich kann auch eine Zuordnung von Schwingungsfrequenzen zu Entfernungen des Objekts oder zu Abmessungen des Objekts eingelernt werden. Hierdurch können vorteilhafterweise unbekannte, äußere Einflüsse berücksichtigt werden.

Bei einer bevorzugten Variante des erfindungsgemäßen Verfahrens wird ein Schwellenwert für eine Änderung der Schwingungsfrequenz über die Zeit vorgegeben. Bei einem Unterschreiten des Schwellenwerts wird eine Änderung der Schwingungsfrequenz nicht einer Änderung eines Objekts im Überwachungsbereich zugeordnet. Eine sehr langsame Änderung der Schwingungsfrequenz ist nämlich oftmals nicht durch eine Bewegung des Objekts bedingt, sondern durch eine Änderung externer Faktoren, wie beispielsweise der Umgebungstemperatur, der Temperatur der elektronischen Komponenten des Schwingkreises, der Luftdichte oder -feuchtigkeit. Hierbei kann vorgesehen sein, dass bei einem Unterschreiten des Schwellenwerts eine Laufzeit oder eine Laufstrecke, die aus der Schwingungsfrequenz bestimmt wurde, als Konstante ausgegeben wird. Einem Benutzer kann somit immer die als zutreffend angesehene Laufzeit oder -strecke angezeigt werden.

Bei einer weiteren bevorzugten Ausführungsform des erfindungsgemäßen Verfahrens ist vorgesehen, dass Prüfstrahlung entlang einer Referenzstrecke gesendet wird, dass eine Referenz-Schwingungsfrequenz für einen Referenz-Schwingkreis bestimmt wird, bei dem entlang der Referenzstrecke Prüfstrahlung gesendet wird, und es wird die Referenz-Schwingungsfrequenz genutzt für eine Zuordnung einer Schwingungsfrequenz, die für in den Überwachungsbereich gesendete Prüfstrahlung bestimmt wurde, zu einer Laufstrecke der Prüfstrahlung. Da in der Regel äußere Faktoren die Referenzstrecke gleichermaßen beeinflussen wie die Laufstrecke zu dem Objekt und/oder durch das Objekt, können hiermit vorteilhafterweise äußere Einflüsse besonders gut kompensiert werden.

Zum Bilden einer Referenzstrecke können ein oder mehrere Spiegel vorgesehen sein, die in den Strahlengang der vom Sender ausgesandten Prüfstrahlung eingeklappt werden können. Die Spiegel leiten die Prüfstrahlung auf den Empfänger, ohne dass die Prüfstrahlung ein Objekt im Überwachungsbereich erreichen kann.

Um eine lange Referenzstrecke zu bilden, kann vorgesehen sein, dass zwei oder mehr Spiegel vorhanden sind, an denen es zu Mehrfachreflexionen kommt, bevor einer der Spiegel die Prüfstrahlung auf den Empfänger leitet. Alternativ oder zusätzlich können eine oder mehrere Lichtleitfasern vorhanden sein, durch die auf engem Raum eine besonders lange Referenzstrecke möglich ist.

Es kann auch vorgesehen sein, dass mindestens ein Strahlteiler vorhanden ist, der vom Sender ausgesandte Prüfstrahlung so aufteilt, dass ein Teil der Prüfstrahlung zu einem Objekt und/oder durch ein Objekt in einen Überwachungsbereich geleitet wird und ein anderer Teil der Prüfstrahlung auf eine bekannte Referenzstrecke geleitet wird. Mit Hilfe von Filtern, beispielsweise Polarisationsfiltern, die durch Spannungen steuerbar sind, kann dann ausgewählt werden, ob Prüfstrahlung in den Überwachungsbereich oder entlang der Referenzstrecke ausgesendet wird. Vorteilhafterweise sind hier keine beweglichen Komponenten erforderlich.

Schließlich können auch mehrere Referenzstrecken unterschiedlicher Länge vorhanden sein.

Bei einer besonders bevorzugten Variante des erfindungsgemäßen Verfahrens wird eine Referenzmessung durchgeführt. Dabei ist vorgesehen, dass eine Referenzverbindung, insbesondere durch eine elektrische Leitung, zwischen dem Sender und dem Empfänger erzeugt wird, dass ein Referenzsignal, insbesondere ein Kurzschluss-Signal, entlang der Referenzverbindung gesendet wird, wobei durch den Sender, die Referenzverbindung und den Empfänger ein Referenz-Schwingkreis gebildet ist, der mit einer Referenz-Schwingungsfrequenz schwingt, dass die Referenz-Schwingungsfrequenz bestimmt und genutzt wird für eine Zuordnung einer Schwingungsfrequenz, die für in den Überwachungsbereich gesendete Prüfstrahlung bestimmt wird, zu einer Laufzeit oder Laufstrecke der Prüfstrahlung.

Als Referenzverbindung kann insbesondere eine elektrische Verbindung vorgesehen sein. Wird der Sender zum Aussenden von Prüfstrahlung angesteuert, wird in diesem Fall ein elektrisches Signal, beispielsweise ein Kurzschluss-Strom, entlang der Referenzverbindung geleitet. Nach einer Referenz-Zeitdauer erreicht das Referenzsignal den Empfänger. Dieser reagiert auf das Referenzsignal in gleicher Weise wie auf empfangene Prüfstrahlung. Somit steuert die Steuer- und Auswerteeinheit den Sender abhängig davon an, ob der Empfänger das Referenzsignal misst. Hierbei wird die Referenz-Schwingungsfrequenz nicht oder nur kaum durch eventuell vom Sender ausgesandte Prüfstrahlung beeinflusst.

Die Referenz-Schwingungsfrequenz ist abhängig von Verzögerungszeiten, die benötigt werden, um mit der Steuer- und Auswerteeinheit den Sender anzusteuern, sobald der Empfänger ein Referenzsignal empfängt oder nicht mehr empfängt. Diese Verzögerungszeiten sind für den Empfang eines Referenzsignals und den Empfang von Prüfstrahlung gleich. Vorteilhafterweise kann aus der Referenz-Schwingungsfrequenz auf die Verzögerungszeiten geschlossen werden. Eine Änderung der Verzögerungszeiten, beispielsweise durch eine Temperaturänderung, kann somit erfasst werden. Die Referenz-Schwingungsfrequenz und/oder die damit bestimmten Verzögerungszeiten können für den Normalbetrieb genutzt werden, um der Schwingungsfrequenz eine Laufzeit und/oder Laufstrecke der Prüfstrahlung zuzuordnen. Insbesondere können dabei Schwankungen äußerer Einflüsse, wie der Temperatur, berücksichtigt werden.

Es kann vorgesehen sein, dass die Referenzmessung automatisch jeweils nach einer vorbestimmten Zeit und/ oder nach einer vorbestimmten Anzahl an Messungen im Normalbetrieb durchgeführt wird.

Von der erfindungsgemäßen Vorrichtung und dem erfindungsgemäßen Verfahren werden auch solche Vorrichtungen und Verfahren erfasst, die nicht als Endergebnis eine ermittelt Laufzeit ausgeben. Stattdessen kann auch eine andere aus der Laufzeit oder der Schwingungsfrequenz des Schwingkreises ermittelte Größe, wie beispielsweise die von der Prüfstrahlung zurückgelegte Strecke, eine Geschwindigkeit eines Objekts oder eine Information über eine Anwesenheit eines Objekts, ausgegeben werden.

Weitere Vorteile und Merkmale der Erfindung werden nachstehend mit Bezug auf die beigefügten schematischen Figuren beschrieben. Hierin zeigen

Fig. 1 eine schematische Darstellung einer erfindungsgemäßen Vorrichtung zum Bestimmen der Laufzeit einer Prüfstrahlung;

Fig. 2 eine schematische Darstellung eines erfindungsgemäßen Verfahrens zum Bestimmen der Laufzeit einer Prüfstrahlung;

Fig. 3 eine schematische Darstellung einer weiteren erfindungsgemäßen Vorrichtung und

Fig. 4 eine schematische Darstellung einer erfindungsgemäßen Vorrichtung mit einer Referenzstrecke.

Äquivalente Komponenten sind in allen Figuren mit denselben Bezugszeichen gekennzeichnet.

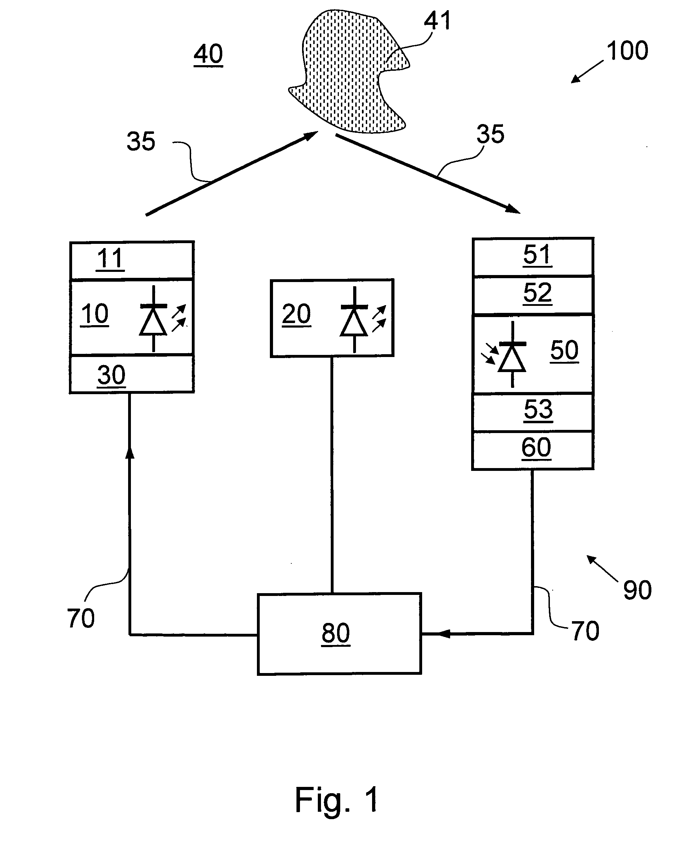

Fig. 1 zeigt eine schematische Darstellung eines Ausführungsbeispiels einer erfindungsgemäßen Vorrichtung 100 zum Bestimmen der Laufzeit einer Prüfstrahlung 35.

Die Vorrichtung 100 weist einen Sender 10 zum Aussenden von Prüfstrahlung 35 in einen Überwachungsbereich 40, einen Empfänger 50 zum Empfangen von aus dem Überwachungsbereich 40 kommender Prüfstrahlung 35 und eine Steuer- und Auswerteeinheit 80 zum Ansteuern des Senders 10 und des Empfängers 50 auf.

Im dargestellten Beispiel befindet sich im Überwachungsbereich 40 ein Objekt 41.

Ein grundlegendes Ziel ist es, die Laufzeit der Prüfstrahlung 35 zu dem Objekt 41 zu bestimmen, um hieraus beispielsweise einen Abstand des Objekts 41 zu der Vorrichtung 100 zu ermitteln.

Im dargestellten Fall ist der Sender 10 ein Lichtsender, welcher als Prüfstrahlung 35 Licht aussendet. Benachbart zum Sender 10 ist ein Sende-Polarisationsfilter 11 angeordnet, der die ausgestrahlte Prüfstrahlung 35 polarisiert.

Benachbart zu dem Empfänger 50 ist ein Empfangs-Polarisationsfilter 51 angeordnet, der nur Prüfstrahlung 35 einer bestimmten Polarisationsrichtung durchlässt. Zusätzlich ist neben dem Empfänger 50 ein Frequenzfilter 52 oder Farbfilter angeordnet, welcher nur Licht derjenigen Frequenz oder Farbe durchlässt, die vom Sender 10 ausgesandt wird.

In elektrischer Verbindung zu dem Empfänger 50 kann zudem ein elektrischer Filter 53 vorhanden sein, der Störsignale herausfiltert.

Sobald der Empfänger 50 Prüfstrahlung 35 empfängt, wird dies von der Steuer- und Auswerteeinheit 80 über eine Rückkopplung 70, bei der es sich im dargestellten Beispiel um eine elektrische Leitung handelt, registriert. Daraufhin veranlasst die Steuer-und Auswerteeinheit 80 über die Rückkopplung 70 den Sender 10, das Aussenden von Prüfstrahlung 35 zu beenden.

Die Prüfstrahlung 35 wird somit als Puls ausgesendet, wobei die Dauer des Pulses von der Laufzeit der Prüfstrahlung 35 abhängt sowie von einer Verzögerungszeit, die benötigt wird, um den Sender 10 zum Stoppen des Aussendens von Prüfstrahlung 35 zu veranlassen, sobald der Empfänger 50 Prüfstrahlung empfängt. Diese Verzögerungszeit ist durch die elektrischen Komponenten der Vorrichtung 100 bedingt. Zu den elektrischen Komponenten können insbesondere der Sender 10, der Empfänger 50, die Sende- und Auswerteeinheit 80 und/oder die elektrische Leitung 70 gehören.

Sobald das Ende des Pulses der Prüfstrahlung 35 den Empfänger 50 erreicht, das heißt sobald der Empfänger 50 nicht mehr Prüfstrahlung 35 empfängt, veranlasst die Steuer- und Auswerteeinheit 80 den Sender 10, erneut Prüfstrahlung 35 auszusenden. Hierbei tritt wiederum die Verzögerungszeit der elektrischen Komponenten auf.

Gemäß der Erfindung wechseln sich also periodisch Sendephasen, in denen Prüfstrahlung 35 ausgesendet wird, und Pausen, in denen keine Prüfstrahlung 35 ausgesendet wird, ab. Solange das Objekt 41 relativ zur Vorrichtung 100 ruht, ist die zeitliche Dauer dieser beiden Phasen konstant. Deren Summe kann als Periodendauer bezeichnet werden. Der Kehrwert der Periodendauer ist die Schwingungsfrequenz des Schwingkreises. Der Schwingkreis umfasst dabei alle Komponenten, die die Schwingungsfrequenz beeinflussen, insbesondere den Sender 10, das Objekt 41, den Empfänger 50 und die Steuer- und Auswerteeinheit 80.

Die Schwingungsfrequenz des Schwingkreises 90 hängt somit direkt von der Laufzeit der Prüfstrahlung 35 ab. Bei bekannter Verzögerungszeit der elektrischen Komponenten kann deshalb die Laufzeit der Prüfstrahlung 35 eindeutig ermittelt werden.

Es können auch ein Empfangsverstärker 60 zum Verstärken von von dem Empfänger 50 empfangenen Signalen und ein Sendeverstärker 30 zum Ansteuern des Senders 10 vorhanden sein. Der Empfangsverstärker 60 und der Sendeverstärker 30 können auch dazu ausgebildet sein, die Funktionen der Steuer- und Auswerteeinheit 80 durchzuführen. In diesem Fall kann die Steuer- und Auswerteeinheit 80 vollständig durch den Sendeverstärker 30 und den Empfangsverstärker 60 ausgebildet sein.

Weiterhin kann ein Schwellenwert vorgebbar sein, der von einer Leistung eines Signals, das vom Empfänger 50 empfangen wird, überschritten werden muss, damit das Signal als Prüfstrahlung 35 gewertet wird und die Steuer- und Auswerteeinheit 80 den Sender 10 veranlasst, Prüfstrahlung 35 auszusenden.

Im dargestellten Beispiel ist ein Pilotsender 20 vorhanden, der von der Steuer- und Auswerteeinheit 80 angesteuert wird. Der Pilotsender 20 kann sichtbares Pilotlicht parallel zu der von dem Sender 10 ausgestrahlten Prüfstrahlung 35 aussenden. So wird dem Bedienpersonal ein erleichtertes Justieren der Prüfstrahlung 35 auf das Objekt 41 ermöglicht. Alternativ können der Sender 10 und der Pilotsender 20 aber auch als eine einzige Lichtquelle ausgebildet sein. Dabei kann vorgesehen sein, dass an dieser Lichtquelle ein schwenkbarer Farbfilter vorhanden ist, der je nach Position einen sichtbaren Anteil des von der Lichtquelle ausgesandten Lichts als Pilotlicht durchlässt oder einen nichtsichtbaren Anteil des von der Lichtquelle ausgesandten Lichts, insbesondere UV- oder IR-Licht, als Prüfstrahlung 35 durchlässt.

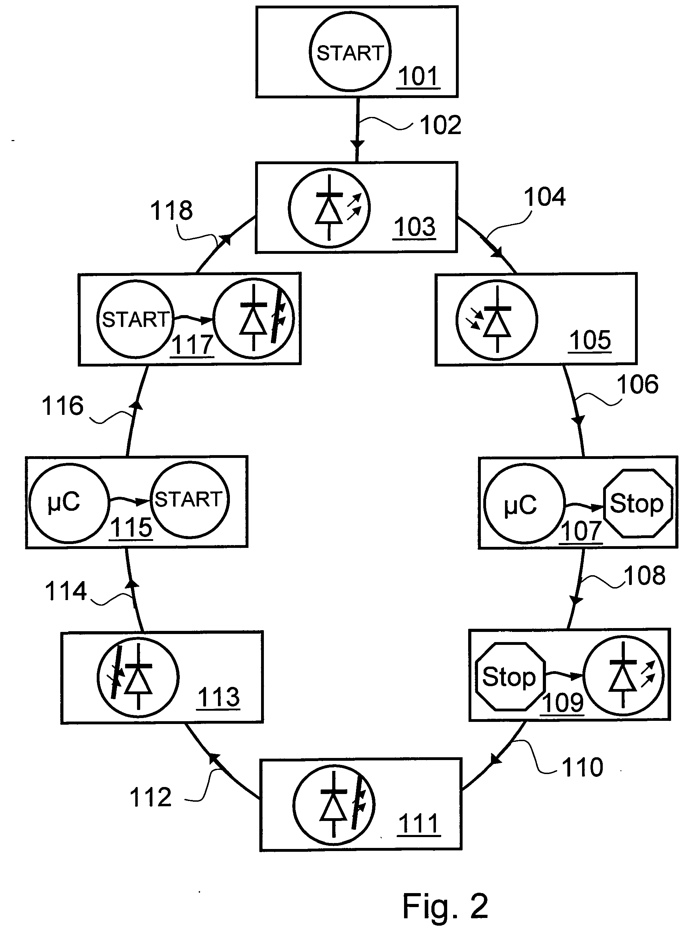

Fig. 2 zeigt schematisch eine Variante des erfindungsgemäßen Verfahrens zum Bestimmen der Laufzeit einer Prüfstrahlung.

Zunächst wird in Schritt 101 ein Startsignal, beispielsweise von der Steuer- und Auswerteeinheit, an den Sender übermittelt. Nach einer Zeitdauer 102 erreicht das Startsignal den Sender.

Der Sender beginnt daraufhin in Schritt 103, Prüfstrahlung in den Überwachungsbereich zu senden. Die Prüfstrahlung wird an einem Objekt zurückgeworfen oder durchläuft das Objekt und erreicht nach einer Zeitdauer 104 den Empfänger.

In Schritt 105 empfängt der Empfänger die Prüfstrahlung. Sobald ein Mikro-Controller μC, bei dem es sich um die Steuer- und Auswerteeinheit handeln kann, registriert, dass der Empfänger Prüfstrahlung empfangen hat, das heißt nach einer Zeitdauer 106, gibt der Mikro-Controller μC in Schritt 107 einen Stoppbefehl aus. Der Stoppbefehl wird über beispielsweise elektrische Leitungen an den Sender oder den Sendeverstärker übermittelt. Hierfür ist eine Zeitdauer 108 erforderlich.

In Schritt 109 erreicht das Stoppsignal den Sender oder den Sendeverstärker. Umgehend hierauf, wofür eine Zeitdauer 110 erforderlich ist, beendet der Sender in Schritt 111 das Aussenden der Prüfstrahlung. Zu diesem Zeitpunkt empfängt der Empfänger weiterhin die bereits ausgesandte Prüfstrahlung.

Nach einer Zeitdauer 112 erreicht in Schritt 113 nicht mehr Prüfstrahlung den Empfänger. Dies wird nach einer Zeitdauer 114 von dem Mikro-Controller μC registriert, der darauf in Schritt 115 einen Startbefehl ausgibt.

Nach einer Zeitdauer 116 erreicht der Startbefehl in Schritt 117 den ausgeschalteten Sender. Dieser beginnt nun umgehend, das heißt nach einer Zeitdauer 118, in Schritt 103 erneut Prüfstrahlung in den Überwachungsbereich auszusenden.

Es liegt somit ein Kreislauf vor, bei dem der Sender abwechselnd aktiv und inaktiv ist. Die Periodendauer dieses Kreislaufs, der auch als Schwingkreis bezeichnet werden kann, hängt von der Laufzeit der Prüfstrahlung ab, nämlich von der Zeitdauer 104 und der Zeitdauer 112.

Die Frequenz des Schwingkreises kann in einfacher Weise mit einem Frequenzzähler ermittelt werden. Dieser kann Bestandteil der Steuer- und Auswerteeinheit sein.

Die Summe der Zeitdauern 106, 108, 110, 114, 116 und 118 ist unabhängig von der Laufzeit der Prüfstrahlung und kann vorab in der Vorrichtung, insbesondere der Steuer- und Auswerteeinheit, gespeichert werden. Somit ist es möglich, aus der Frequenz des Schwingkreises die Zeitdauern 104 und 112, also die Laufzeiten der Prüfstrahlung zum und/oder durch das Objekt, zu ermitteln.

Bei einer bevorzugten Variante des erfindungsgemäßen Verfahrens gibt in Schritt 115 der Mikro-Controller nicht sofort einen Startbefehl an den Sender aus. Vielmehr wartet der Mikro-Controller eine vorgegebene Zeitspanne ab. Hierdurch sinken die Frequenz des Schwingkreises und die zeitlich gemittelte Leistung der ausgesandten Prüfstrahlung. Damit ist es möglich, eine niedrigere Laserklasse einzuhalten.

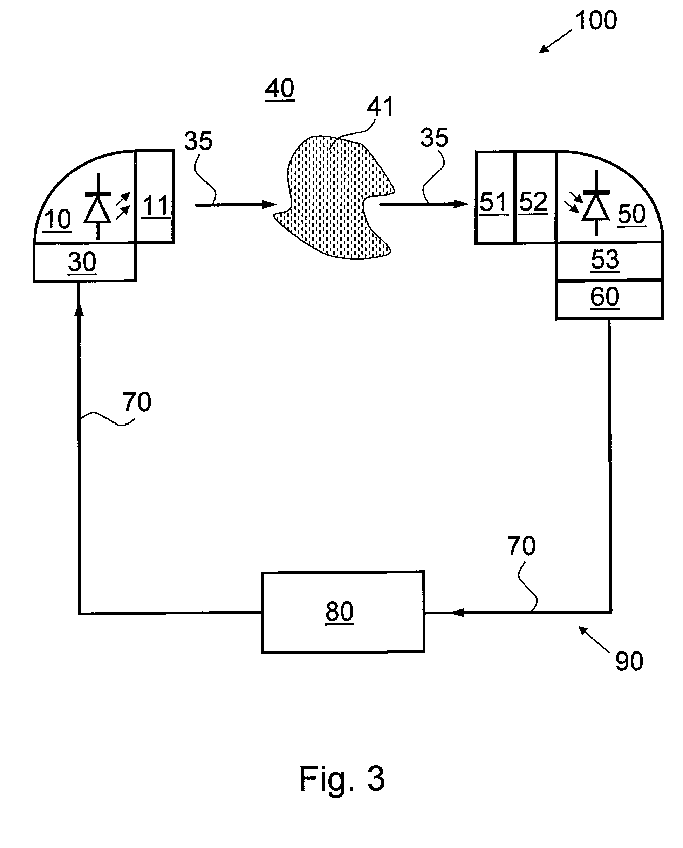

Fig. 3 zeigt eine weitere Ausführungsform einer erfindungsgemäßen Vorrichtung 100.

Bei dieser Vorrichtung 100 sendet ebenfalls der Sender 10 Prüfstrahlung 35 in den Überwachungsbereich 40 in Richtung eines Objekts 41. Im Unterschied zu der in Fig. 1 dargestellten Ausführung empfängt hier allerdings der Empfänger 50 Prüfstrahlung 35, welche das Objekt 41 durchlaufen hat.

Die Laufzeit der Prüfstrahlung 35 hängt hier von der Objektlänge, die von der Prüfstrahlung 35 durchlaufen wird, sowie von dem Material des Objekts 41 ab. Handelt es sich bei der Prüfstrahlung 35 um Licht, so ist der Brechungsindex des Objekts 41 bedeutsam.

Ist beispielsweise das Material oder der Brechungsindex des Objekts 41 bekannt, so kann aus der Laufzeit der Prüfstrahlung die Objektlänge ermittelt werden.

Es kann vorgesehen sein, dass der Sender 10 und der Empfänger 50 in getrennten Gehäusen angeordnet sind. Der Überwachungsbereich 40 erstreckt sich dann zwischen diesen beiden Gehäusen.

Flexible Einsatzmöglichkeiten werden bei einer Ausführungsvariante der erfindungsgemäßen Vorrichtung erreicht, bei welcher an dem Sender 10 und/oder dem Empfänger 50 jeweils eine Lichtleitfaser (nicht dargestellt) angebracht ist. Hiermit ist es möglich, die beiden Lichtleitfasern direkt an gegenüberliegende Seiten eines Objekts 41, das vermessen werden soll, zu halten. Die Länge der Lichtleitfasern und somit die Laufzeit der Prüfstrahlung durch die Lichtleitfasern ist dabei bekannt. Aus der Schwingungsfrequenz des Schwingkreises kann dann in einfacher Weise die Objektlänge bestimmt werden. Bei dieser Ausführungsform können Sender und Empfänger in einem einzigen, kompakten Gehäuse angeordnet sein. Der Überwachungsbereich 40 erstreckt sich dann zwischen den beiden Lichtleitfasern.

Als Objekte 41, die zu vermessen sind, kommen insbesondere Lichtleitfasern unbekannter Länge in Frage. Mit der Erfindung kann die Länge der zu vermessenden Lichtleitfaser 41 bestimmt werden, ohne dass die zu vermessende Lichtleitfaser 41 entrollt oder in eine bestimmte Lage gebracht werden muss.

Ist die Objektlänge bekannt, so kann aus der Laufzeit der Prüfstrahlung direkt eine Materialeigenschaft des Objekts 41 bestimmt werden. Handelt es sich bei der Prüfstrahlung im Licht, so kann beispielsweise der Brechungsindex des Objekts 41 ermittelt werden. Die hierbei erforderliche Kenntnis der Objektlänge kann einfach erlangt werden, wenn der Abstand zwischen dem Sender 10 und dem Empfänger 50 über beispielsweise Stellschrauben einstellbar ist. Dann kann der Abstand gerade so eingestellt werden, dass er der Objektlänge entspricht. Eine Einstellung der Stellschrauben kann von der Steuer- und Auswerteeinheit erfasst werden. So ist der Steuer- und Auswerteeinheit die Objektlänge bekannt. Es sind dann keine weiteren Informationen erforderlich, damit der Brechungsindex des Objekts 41 bestimmt werden kann.

Bei einer weiteren Variante der erfindungsgemäßen Vorrichtung wird aus einer Änderung der Laufzeit oder aus einer Änderung der Schwingungsfrequenz des Schwingkreises eine Geschwindigkeit eines Objekts bestimmt.

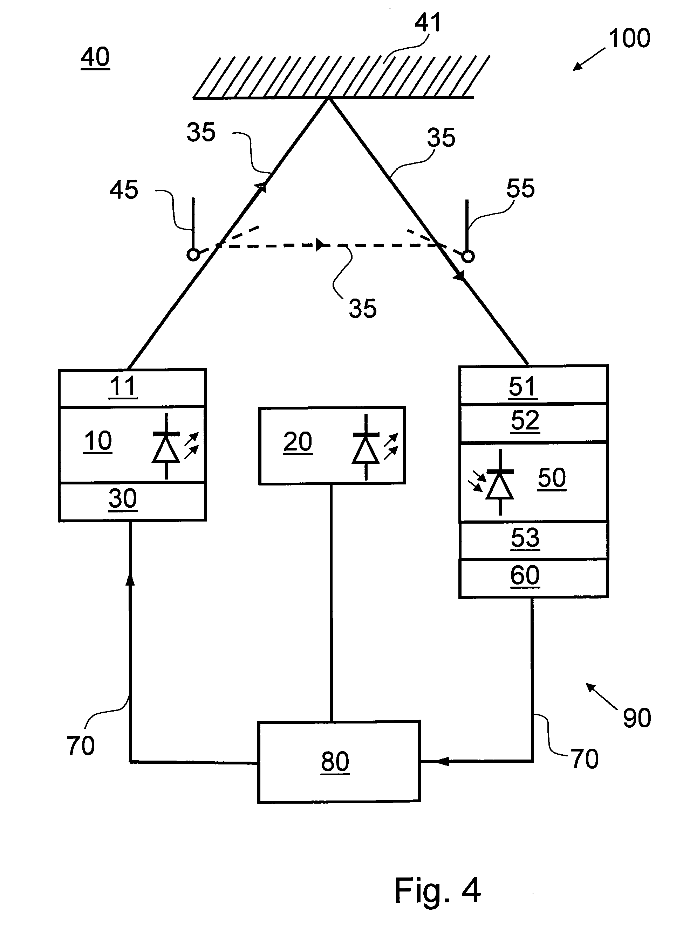

Fig. 4 zeigt eine schematische Darstellung eines Ausführungsbeispiels einer erfindungsgemäßen Vorrichtung 100, bei welcher eine Referenzstrecke gebildet wird.

Im dargestellten Fall sind hierzu zwei schwenkbare Spiegel 45, 55 vorhanden. Die Spiegel 45, 55 können sich in einer ausgeschwenkten Position befinden, in der sie von der Prüfstrahlung 35 nicht getroffen werden. In dieser Position kann die Prüfstrahlung 35 also ungestört in Richtung eines Objekts 41 laufen. Befinden sich die Spiegel 45, 55 in einer eingeschwenkten Position (gestrichelt dargestellt), so leiten sie die Prüfstrahlung 35 auf den Empfänger 50, ohne dass die Prüfstrahlung 35 auf ein Objekt 41 treffen kann. Die hierbei von der Prüfstrahlung 35 zurückgelegte Strecke ist vorgegeben und wird als Referenzstrecke bezeichnet. Für die Referenzstrecke kann eine Schwingungsfrequenz des Schwingkreises 90, der dann als Referenz-Schwingkreis 90 bezeichnet werden kann, gemessen werden und für Kalibrierzwecke benutzt werden.

In weiteren Ausführungsformen der erfindungsgemäßen Vorrichtung 100 kann die Referenzstrecke aber auch in anderer Weise gebildet sein.

So kann beispielsweise ein einziger Spiegel 45 zum Bilden einer Referenzstrecke vom Sender 10 zum Spiegel 45 und weiter zum Empfänger 50 vorgesehen sein.

Alternativ können mindestens zwei Spiegel 45, 55 vorhanden sein, zwischen denen es zu Mehrfachreflexionen der Prüfstrahlung 35 kommt, bevor die Prüfstrahlung 35 von einem der Spiegel 45, 55 auf den Detektor 50 geleitet wird.

Weiterhin können auch Lichtleitfasern zum Bilden einer Referenzstrecke verwendet werden.

Gegenüber herkömmlichen Methoden zur Bestimmung eines Abstands, wie zum Beispiel Triangulationsmethoden, oder bekannten Methoden zur Laufzeitmessung, wie Time of Flight-Messungen, bietet die erfindungsgemäße Lösung deutliche Vorteile. So wird durch die Frequenzmessung des Schwingkreises automatisch eine Mittelung über mehrere Periodendauern, das heißt über mehrere Pulse an Prüfstrahlung, durchgeführt. Hierbei sind keine aufwändigen Computer notwendig. Gegenüber Schwingkreisen, deren Schwingungsfrequenz von der Phase der empfangenen Prüfstrahlung abhängt, besteht der Vorteil, dass es bei der Zuordnung einer Schwingungsfrequenz zu einer Laufzeit keine Mehrdeutigkeiten gibt.

Durch das erfindungsgemäße Verfahren und die erfindungsgemäße Vorrichtung kann somit vorteilhafterweise die Laufzeit einer Prüfstrahlung in einfacher Weise und besonders genau bestimmt werden.

**Patentansprüche**

1. Vorrichtung zum Bestimmen der Laufzeit einer Prüfstrahlung (35) zu einem Objekt (41) und/oder durch ein Objekt (41) in einem Überwachungsbereich (40)

   mit einem Sender (10) zum Aussenden der Prüfstrahlung (35) in den Überwachungsbereich (40),
   mit einem Empfänger (50) zum Empfangen von aus dem Überwachungsbereich (40) kommender Prüfstrahlung (35) und
   mit einer Steuer- und Auswerteeinheit (80) zum Ansteuern des Senders (10) und zum Auswerten der von dem Empfänger (50) empfangenen Prüfstrahlung (35),

   **dadurch gekennzeichnet,**

   **dass** durch den Sender (10) und den Empfänger (50) ein Schwingkreis (90) gebildet ist, dessen Schwingungsfrequenz von der Laufzeit der Prüfstrahlung (35) zu dem Objekt (41) und/oder durch das Objekt (41) abhängt, wobei zum Erzeugen einer Schwingung des Schwingkreises (90) die Steuer-und Auswerteeinheit (80) dazu eingerichtet ist,
   - das Aussenden von Prüfstrahlung (35) durch den Sender (10) zu stoppen, sobald der Empfänger (50) Prüfstrahlung (35) empfängt,
   - den Sender (10) zu veranlassen, Prüfstrahlung (35) in den Überwachungsbereich (40) zu senden, sobald der Empfänger (50) keine Prüfstrahlung (35) mehr empfängt,
   - die Schwingungsfrequenz des Schwingkreises (90) zu bestimmen und
   - aus der Schwingungsfrequenz die Laufzeit der Prüfstrahlung (35) zu bestimmen.

2. Vorrichtung nach Anspruch 1,
   **dadurch gekennzeichnet,**
   **dass** der Sender (10) ein Lichtsender, der Empfänger (50) ein Lichtempfänger und die Prüfstrahlung (35) Licht ist.

3. Vorrichtung nach Anspruch 2,
   **dadurch gekennzeichnet,**
   **dass** ein Sende-Polarisationsfilter (11) vorhanden ist zum Polarisieren des in den Überwachungsbereich gesandten Lichts und
   **dass** ein Empfangs-Polarisationsfilter (51) vorhanden ist zum Transmittieren von polarisiertem Licht zu dem Empfänger (50).

4. Vorrichtung nach einem der Ansprüche 1 bis 3,
   **dadurch gekennzeichnet,**
   **dass** die Prüfstrahlung (35) akustisch und/oder elektromagnetisch ist und
   **dass** der Sender (10) zum Aussenden und der Empfänger (50) zum Empfangen von akustischer und/oder elektromagnetischer Prüfstrahlung (35) eingerichtet ist.

5. Vorrichtung nach einem der Ansprüche 1 bis 4,
   **dadurch gekennzeichnet,**
   **dass** die Steuer- und Auswerteeinrichtung (80) dazu eingerichtet ist, einen abgeschalteten Zustand des Senders (10), in welchem der Sender (10) keine Prüfstrahlung (35) in den Überwachungsbereich (40) aussendet, zu verlängern.

**6.** Vorrichtung nach einem der Ansprüche 1 bis 5,
**dadurch gekennzeichnet,**
**dass** zum Herausfiltern von Störsignalen ein Frequenzfilter (52), insbesondere ein optischer Filter, zwischen dem Objekt (41) im Überwachungsbereich (40) und dem Empfänger (50) vorhanden ist.

**7.** Vorrichtung nach einem der Ansprüche 1 bis 6,
**dadurch gekennzeichnet,**
**dass** als Objekt (41) im Überwachungsbereich (40) mindestens ein Reflektor (41) zum Zurückstrahlen von ausgesendeter Prüfstrahlung (35) zu dem Empfänger (50) vorhanden ist.

**8.** Vorrichtung nach einem der Ansprüche 1 bis 7,
**dadurch gekennzeichnet,**
**dass** die Steuer- und Auswerteeinheit (80) zum Ansteuern des Senders (10) einen Sendeverstärker (30) und zum Auswerten von Empfangssignalen des Empfängers (50) einen Empfangsverstärker (60) aufweist.

**9.** Vorrichtung nach Anspruch 8,
**dadurch gekennzeichnet,**
**dass** der Empfangsverstärker (60) dazu eingerichtet ist, über eine Rückkopplung (70), insbesondere über eine elektrische Leitung (70), den Sendeverstärker (30) anzusteuern, sobald der Empfänger (50) Prüfstrahlung (35) empfängt und/oder sobald der Empfänger (50) Prüfstrahlung (35) nicht mehr empfängt.

**10.** Vorrichtung nach einem der Ansprüche 1 bis 9,
**dadurch gekennzeichnet,**
**dass** ein Pilotsender (20), insbesondere ein Pilotlaser, zum Aussenden eines Justagelichtstrahls vorhanden ist.

**11.** Vorrichtung nach einem der Ansprüche 1 bis 10,
**dadurch gekennzeichnet,**
**dass** die vom Sender (10) in den Überwachungsbereich (40) gesendete Prüfstrahlung (35) nichtsichtbares Licht, insbesondere UV-Licht oder IR-Licht, ist.

**12.** Vorrichtung nach einem der Ansprüche 1 bis 11,
**dadurch gekennzeichnet,**
**dass** ein Temperaturfühler (75) zum Bestimmen einer Temperatur vorhanden ist und
**dass** die Steuer- und Auswerteeinheit (80) dazu eingerichtet ist, die Laufzeit der Prüfstrahlung (35) aus der Schwingungsfrequenz des Schwingkreises (90) und aus der mit dem Temperaturfühler (75) bestimmten Temperatur zu bestimmen.

**13.** Verfahren zum Bestimmen der Laufzeit einer Prüfstrahlung (35) zu einem Objekt (41) und/oder durch ein Objekt (41) in einem Überwachungsbereich (40), bei dem durch einen Sender (10) die Prüfstrahlung (35) in den Überwachungsbereich (40) ausgesendet wird,
bei dem aus dem Überwachungsbereich (40) kommende Prüfstrahlung (35) durch einen Empfänger (50) empfangen wird,
**dadurch gekennzeichnet,**
**dass** durch den Sender (10) und den Empfänger (50) ein Schwingkreis (90) gebildet ist, dessen Schwingungsfrequenz von der Laufzeit der Prüfstrahlung (35) zu dem Objekt (41) und/oder durch das Objekt (41) abhängt,
**dass** das Aussenden von Prüfstrahlung (35) durch den Sender (10) gestoppt wird, sobald der Empfänger (50) Prüfstrahlung (35) empfängt,
**dass** der Sender (10) veranlasst wird, Prüfstrahlung (35) in den Überwachungsbereich (40) zu senden, sobald der Empfänger (50) keine Prüfstrahlung (35) mehr empfängt,
**dass** die Schwingungsfrequenz des Schwingkreises (90) bestimmt wird und
**dass** aus der Schwingungsfrequenz die Laufzeit der Prüfstrahlung (35) bestimmt wird.

**14.** Verfahren nach Anspruch 13,
**dadurch gekennzeichnet,**
**dass** ein erster Teach-Vorgang durchgeführt wird, in welchem eine Signalform der von dem Objekt (41) zurückgestrahlten Prüfstrahlung (35) eingelernt wird.

**15.** Verfahren nach Anspruch 13 oder 14,

**dadurch gekennzeichnet,**
**dass** ein zweiter Teach-Vorgang durchgeführt wird, in dem eine Zuordnung von Schwingungsfrequenzen des Schwingkreises (90) zu Laufzeiten der Prüfstrahlung (35) eingelernt wird.

**16.** Verfahren nach einem der Ansprüche 13 bis 15,
**dadurch gekennzeichnet,**
**dass** ein Schwellenwert für eine Änderung der Schwingungsfrequenz über die Zeit vorgegeben wird und
**dass** bei einem Unterschreiten des Schwellenwerts eine Änderung der Schwingungsfrequenz nicht einer Änderung eines Objekts (41) im Überwachungsbereich (40) zugeordnet wird.

**17.** Verfahren nach einem der Ansprüche 13 bis 16,
**dadurch gekennzeichnet,**
**dass** Prüfstrahlung (35) entlang einer Referenzstrecke gesendet wird,
**dass** eine Referenz-Schwingungsfrequenz für einen Referenz-Schwingkreis bestimmt wird, bei dem entlang der Referenzstrecke Prüfstrahlung (35) gesendet wird, und
**dass** die Referenz-Schwingungsfrequenz genutzt wird für eine Zuordnung einer Schwingungsfrequenz, die für in den Überwachungsbereich (40) gesendete Prüfstrahlung (35) bestimmt wird, zu einer Laufstrecke der Prüfstrahlung (35).

**18.** Verfahren nach einem der Ansprüche 13 bis 17,
**dadurch gekennzeichnet,**
**dass** eine Referenzverbindung, insbesondere durch eine elektrische Leitung, zwischen dem Sender (10) und dem Empfänger (50) erzeugt wird,
**dass** ein Referenzsignal, insbesondere ein Kurzschluss-Signal, entlang der Referenzverbindung gesendet wird, wobei durch den Sender (10), die Referenzverbindung und den Empfänger (50) ein Referenz-Schwingkreis gebildet ist, der mit einer Referenz-Schwingungsfrequenz schwingt,
**dass** die Referenz-Schwingungsfrequenz bestimmt und genutzt wird für eine Zuordnung einer Schwingungsfrequenz, die für in den Überwachungsbereich (40) gesendete Prüfstrahlung (35) bestimmt wird, zu einer Laufzeit oder Laufstrecke der Prüfstrahlung (35).

Fig. 1

Fig. 2

100

<u>40</u>

41

35

35

<u>10</u> ⟂ ⟋ <u>11</u>

<u>51</u> <u>52</u> ⟋ ⟂ <u>50</u>

<u>30</u>

<u>53</u>

<u>60</u>

70

70

<u>80</u>

90

Fig. 3

Fig. 4

Europäisches
Patentamt
European
Patent Office
Office européen
des brevets

**EUROPÄISCHER RECHERCHENBERICHT**

Nummer der Anmeldung

EP 10 01 4411

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 3 428 815 A (THOMPSON JOHN R) 18. Februar 1969 (1969-02-18) * Spalte 1, Zeile 15 - Spalte 6, Zeile 75; Abbildung 1 * ----- | 1-18 | INV. G01S7/491 G01S7/497 G01S17/32 |
| X | DE 43 33 113 A1 (BOSCH GMBH ROBERT [DE]) 30. März 1995 (1995-03-30) * das ganze Dokument * ----- | 1-18 | |
| X | DE 100 18 948 A1 (LEUZE ELECTRONIC GMBH & CO [DE] LEUZE ELECTRONIC GMBH & CO KG [DE]) 30. November 2000 (2000-11-30) * das ganze Dokument * ----- | 1-18 | |
| X | EP 0 434 191 A2 (HUNTING ENG LTD [GB]) 26. Juni 1991 (1991-06-26) * das ganze Dokument * ----- | 1-18 | |
| X | DE 44 14 514 A1 (DEICHL KLAUS [DE]) 2. November 1995 (1995-11-02) * das ganze Dokument * ----- | 1-18 | RECHERCHIERTE SACHGEBIETE (IPC) |
| A,D | EP 0 747 727 A2 (SICK OPTIK ELEKTRONIK ERWIN [DE] SICK AG [DE]) 11. Dezember 1996 (1996-12-11) * das ganze Dokument * | 1 | G01S |
| A | EP 1 262 906 A2 (SICK AG [DE]) 4. Dezember 2002 (2002-12-04) * das ganze Dokument * ----- | 1 | |

Der vorliegende Recherchenbericht wurde für alle Patentansprüche erstellt

| Recherchenort | Abschlußdatum der Recherche | Prüfer |
|---|---|---|
| München | 10. März 2011 | Beer, Mark |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

    ......................................................................................
& : Mitglied der gleichen Patentfamilie, übereinstimmendes
Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 10 01 4411

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-03-2011

| Im Recherchenbericht angeführtes Patentdokument | | | Datum der Veröffentlichung | Mitglied(er) der Patentfamilie | | | Datum der Veröffentlichung |
|---|---|---|---|---|---|---|---|
| US | 3428815 | A | 18-02-1969 | KEINE | | | |
| DE | 4333113 | A1 | 30-03-1995 | KEINE | | | |
| DE | 10018948 | A1 | 30-11-2000 | KEINE | | | |
| EP | 0434191 | A2 | 26-06-1991 | GB | 2239368 | A | 26-06-1991 |
| DE | 4414514 | A1 | 02-11-1995 | KEINE | | | |
| EP | 0747727 | A2 | 11-12-1996 | DE | 19520993 | A1 | 12-12-1996 |
| | | | | JP | 3639673 | B2 | 20-04-2005 |
| | | | | JP | 8338872 | A | 24-12-1996 |
| | | | | US | 5874719 | A | 23-02-1999 |
| EP | 1262906 | A2 | 04-12-2002 | AT | 349016 | T | 15-01-2007 |
| | | | | DE | 10126087 | A1 | 05-12-2002 |
| | | | | US | 2003020491 | A1 | 30-01-2003 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0747727 A2

- EP 1262906 A2